(19) Europäisches Patentamt
European Patent Office
Office européen des brevets

(11) EP 0 521 711 B1

(12) **EUROPEAN PATENT SPECIFICATION**

(45) Date of publication and mention of the grant of the patent:
**19.06.1996 Bulletin 1996/25**

(51) Int Cl.[6]: **G03C 1/825**, G03C 1/83, C09B 23/00, G03C 1/12

(21) Application number: **92306085.9**

(22) Date of filing: **01.07.1992**

(54) **Silver halide photographic light-sensitive material**

Photographisches lichtempfindliches Silberhalogenidmaterial

Matériau photographique sensible à la lumière à l'halogénure d'argent

(84) Designated Contracting States:
**DE FR GB NL**

(30) Priority: **04.07.1991 JP 189485/91**

(43) Date of publication of application:
**07.01.1993 Bulletin 1993/01**

(73) Proprietor: **KONICA CORPORATION**
**Tokyo 160 (JP)**

(72) Inventors:
- **Kawashima, Yasuhiko, c/o Konica Corporation Hino-shi, Tokyo 191 (JP)**
- **Kagawa, Nobuaki, c/o Konica Corporation Hino-shi, Tokyo 191 (JP)**
- **Usagawa, Yasushi, c/o Konica Corporation Hino-shi, Tokyo 191 (JP)**
- **Hirabayashi, Shigeto, c/o Konica Corporation Hino-shi, Tokyo 191 (JP)**

(74) Representative:
**Ellis-Jones, Patrick George Armine et al**
**J.A. KEMP & CO.**
**14 South Square**
**Gray's Inn**
**London WC1R 5LX (GB)**

(56) References cited:
**GB-A- 524 500**
**GB-A- 1 077 049**
**US-A- 3 471 293**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 521 711 B1

## Description

## SILVER HALIDE PHOTOGRAPHIC LIGHT-SENSITIVE MATERIAL

The present invention relates to a silver halide photographic light-sensitive material containing a new non-diffusible dye, more specifically a silver halide photographic light-sensitive material containing a new non-diffusible dye exhibiting an improved efflux-decoloring property during processing.

With respect to silver halide photographic light-sensitive materials (hereinafter referred to as light-sensitive materials), it is a well-known fact that a dye is added to a structural layer of the light-sensitive material to absorb light in a particular wavelength band for the purpose of light absorbing filtration, prevention of halation, prevention of irradiation or regulation of the sensitivity of light-sensitive emulsion; accordingly, it is conventional practice to color the hydrophilic colloid layer with such a dye.

Of the structural layers of the light-sensitive material, the filter layer, usually located on a light-sensitive emulsion layer or between said emulsion layer and another emulsion layer, serves to change the incident light coming in the emulsion layer into light with the desired spectrum. The anti-halation layer, provided between a light-sensitive emulsion layer and the support or on the back face of the support for the purpose of improving image sharpness, serves to absorb harmful reflected light in the interface between the emulsion layer and the support or on the back face of the support to improve image sharpness.

It is another practice to improve image sharpness by preventing irradiation by absorbing reflected light, scattered light and other light which are harmful to silver halide grains by the use of a dye to color a light-sensitive emulsion layer.

The dyes used for these purposes must not only possess an absorption spectral characteristic suitable to the purpose of use thereof but also meet various requirements, such as complete decoloring during development, easy dissolution from the light-sensitive material during development, freedom of residual color stain by the dye after processing, absence of adverse effects, such as fogging and desensitization, on the light-sensitive emulsion, prevention of dye diffusion from the colored layer to another layer, and excellent storage stability with no discoloration or fading in the light-sensitive material or in aqueous solutions.

To date, numerous investigations have been made to develop a dye meeting these requirements, including the benzylidene dyes proposed in US Patent Nos. 3,540,887, 3,544,325 and 3,560,214, Japanese Patent Examined Publication No. 10578/1956 and Japanese Patent Publication Open to Public Inspection (hereinafter referred to as Japanese Patent O.P.I. Publication) No. 3623/1976, the oxonol dyes proposed in British Patent No. 506,385 and Japanese Patent Examined Publication No. 22069/1964, the merocyanine dye proposed in US Patent No. 2,493,747 and the styryl dye proposed in US Patent No. 1,845,404.

Although some of these conventional dyes relatively little affect emulsion performance and are bleacheable, soluble, discolorable or otherwise changeable during processing, they are unsatisfactory as to diffusion resistance. Specifically, they have a drawback that when a particular one of the plurality of layers is selectively colored to use as a filter layer or an anti-halation layer, they not only diffuse considerably into other layers and degrade the light absorption effect but also exhibit undesirable spectral action on other layers.

Thus, as a means of selectively dyeing a particular hydrophilic colloid layer, there has been proposed the use of a mordant to immobilize the dye and the use of a non-diffusible dye.

However, the method using a mordant is unsatisfactory because coatability is poor, interlayer diffusion cannot be suppressed satisfactorily, and, in addition, efflux-decoloring properties during processing are poor, a high pH processing bath is required, and suitability to rapid processing is poor.

There have been made a large number of investigations on the use of a non-diffusible dye, including the silver salts of oxonol dye having a thiobarbituric acid parent nucleus with a particular structure described in British Patent No. 1,077,049 and US Patent No. 3,471,293. GB-A- 524500 also discloses salts of barbituric acid derivatives for this purpose.

Although these known silver salts of dye possess sufficient diffusion resistance to suppress interlayer diffusion, they have a drawback of efflux-decoloring property during processing.

Thus, there is no dye meeting these requirements; there is strong demand for the development of such a dye.

It is an object of the present invention to provide a silver halide photographic light-sensitive material wherein the light-sensitive silver halide emulsion layer or a non-light-sensitive colloid layer contains a non-diffusible dye possessing good absorption spectral characteristics, which is excellent in efflux-decoloring properties during photographic processing and highly suitable for rapid photographic processing, and which has no adverse effects, such as fogging and desensitization, on the photographic properties of the light-sensitive silver halide emulsion.

According to the present invention there is provided a silver halide photographic light-sensitive material containing a silver salt of a compound represented by one of the following formulas I through VI.

Formula I

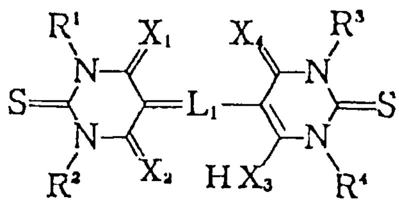

wherein $R^1$ represents an alkyl group, an alkenyl group, an aryl group or a heterocyclic group; $R^2$ through $R^4$ independently represent a hydrogen atom, an alkyl group, an alkenyl group, an aryl group or a heterocyclic group; $X_1$ through $X_4$ independently represent an oxygen atom or a sulfur atom; $L_1$ represents a methine group.

Formula II

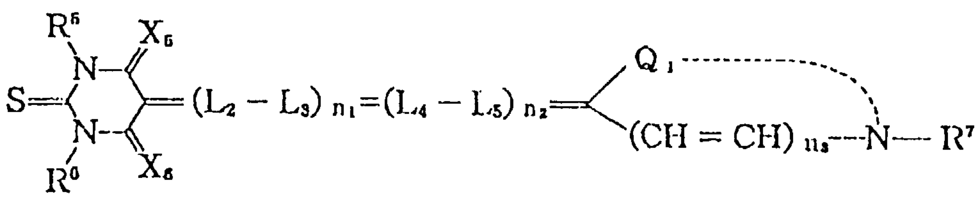

wherein $R^5$ and $R^6$ have the same definitions as $R^2$ through $R^4$ in formula I; $X_5$ and $X_6$ have the same definitions as $X_1$ through $X_4$ in formula I; $L_2$ through $L_5$ each represent a methine group; $n_1$ through $n_3$ independently represent an integer of 0 to 2; $R^7$ represents an alkyl group or an alkenyl group; $Q_1$ represents a group of non-metallic atoms necessary to complete a 5- or 6-membered heterocyclic ring.

Formula III

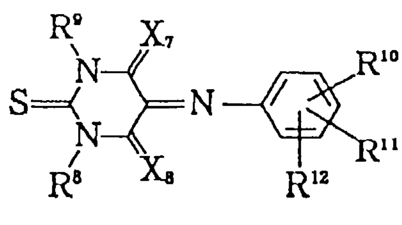

wherein $R^8$ and $R^9$ have the same definitions as $R^2$ through $R^4$ in formula I; $X_7$ and $X_8$ have the same definitions as $X_1$ through $X_4$ in formula I; $R^{10}$ through $R^{12}$ independently represent a hydrogen atom, an alkyl group, an alkenyl group, an aryl group, a heterocyclic group, a halogen atom, a cyano group, a sulfo group, $-COR^{13}$, $-CON(R^{13})(R^{14})$, $-N(R^{13})(R^{14})$, $-OR^{13}$, $-SOR^{13}$, $-SO_2R^{13}$, $-SO_2N(R^{13})(R^{14})$, $-N(R^{13})COR^{14}$, $-N(R^{13})SO_2R^{14}$, $-N(R^{13})CON(R^{14})(R^{15})$, $-SR^{13}$ or $-COOR^{13}$; $R^{13}$ through $R^{15}$ independently represent a hydrogen atom, an alkyl group, an alkenyl group, an aryl group or a heterocyclic group.

Formula IV

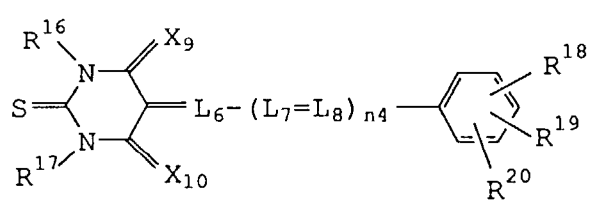

wherein $R^{16}$ and $R^{17}$ have the same definitions as $R^2$ through $R^4$ in formula I, with the proviso that they are not both hydrogen; $X_9$ and $X_{10}$ have the same definitions as $X_1$ through $X_4$ in formula I; $L_6$ through $L_8$ each represent a methine group; $n_4$ represents an integer of 0 to 2; $R^{18}$ through $R^{20}$ have the same definitions as $R^{10}$ through $R^{12}$ in formula III.

Formula V

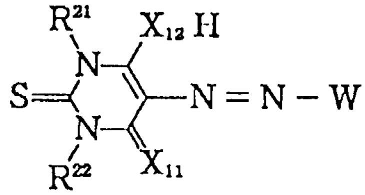

wherein $R^{21}$ and $R^{22}$ have the same definitions as $R^2$ through $R^4$ in formula I , with the proviso that they are not both hydrogen; $X_{11}$ and $X_{12}$ have the same definitions as $X_1$ through $X_4$ in formula I; W represents an aryl group or a heterocyclic group.

Formula VI

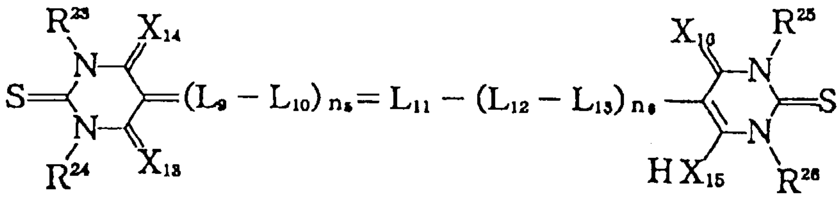

wherein $R^{23}$ through $R^{25}$ have the same definitions as $R^2$ through $R^4$ in formula I; $R^{26}$ has the same definition as $R^1$ in formula I, provided that at least one of $R^{23}$ through $R^{25}$ is a hydrogen atom. $L_9$ through $L_{13}$ each represent a methine group; $n_5$ and $n_6$ independently represent an integer of 0 to 2; $X_{13}$ through $X_{16}$ have the same definitions as $X_1$ through $X_4$ in formula I.

The compounds represented by formulas I through VI are described below.

With respect to formulas I through VI, examples of the alkyl groups represented by $R^1$ through $R^{26}$ include a methyl group, an ethyl group, a propyl group, an isopropyl group, a n-butyl group, a tert-butyl group, a cyclopentyl group and a cyclohexyl group. These alkyl groups may have been substituted by, for example, a hydroxyl group, a cyano group, a sulfo group, a carboxyl group, a halogen atom such as a fluorine atom, a chlorine atom or a bromine atom, an alkoxy group such as a methoxy group or an ethoxy group, an aryloxy group such as a phenoxy group, a 4-sulfophenoxy group or a 2,4-disulfophenoxy group, an aryl group such as a phenyl group, a 4-sulfophenyl group or a 2,5-disulfophenyl group, an alkoxycarbonyl group such as a methoxycarbonyl group or an ethoxycarbonyl group or an aryloxycarbonyl group such as a phenoxycarbonyl group.

Examples of the aryl groups represented by $R^1$ through $R^{26}$ and W include a phenyl group and a naphthyl group. These groups may be substituted by the alkyl groups represented by $R^1$ through $R^{26}$ and by the same substituents as specified for the alkyl groups.

Examples of the heterocyclic groups represented by $R^1$ through $R^{26}$ and W include a pyridyl group, a thiazolyl group, an oxazolyl group, an imidazolyl group, a furyl group, a pyrrolyl group, a pyrazinyl group, a pyrimidinyl group, a pyridazinyl group, a purinyl group, a selenazoyl group, a sulfolanyl group, a piperidinyl group, a pyrazolyl group or a tetrazolyl group. These groups may be substituted by the alkyl groups represented by $R^1$ through $R^{24}$ and by the same substituents as specified for the alkyl groups.

Examples of the alkenyl groups represented by $R^1$ through $R^{26}$ include a vinyl group and an allyl group. These groups may be substituted by the alkyl groups represented by $R^1$ through $R^{26}$ and by the same substituents as specified for the alkyl groups.

Examples of the heterocyclic group formed by $Q_1$ in formula II include the heterocyclic rings described in pages 23 through 26 of Japanese Patent O.P.I. Publication No. 282832/1986 and the heterocyclic rings represented by the following formula:

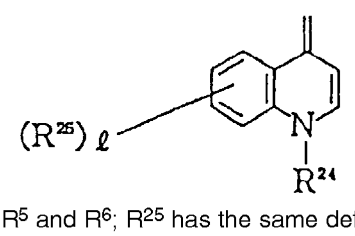

wherein $R^{24}$ has the same definition as $R^5$ and $R^6$; $R^{25}$ has the same definition as $R^{10}$ through $R^{12}$; 1 represents an

integer of 0 to 3.

$R_1$ represents an alkyl group, an aryl group or a heterocyclic group, preferably represents an alkyl group, a phenyl group or a pyridyl group, particularly preferably an alkyl group having 1 to 5 carbon atoms, a phenyl group or a pyridyl group.

$R_2$, $R_3$ and $R_4$ represent independently a hydrogen atom, an alkyl group, an aryl group or a heterocyclic group, and preferably represent a hydrogen atom, an alkyl group, a phenyl group or a pyridyl group, particularly preferably a hydrogen atom, an alkyl group having 1 to 5 carbon atoms of, a phenyl group or a pyridyl group.

The compounds represented by Formula I and Formula VI can be synthesized with reference to U.S. Patent No. 3,471,293; U.S. Patent No. 3,247,127; British Patent No. 1,077,049.

The compounds represented by Formula II can be synthesized with reference to Japanese Patent O.P.I. Publication Nos. 111,857/1983 and 37,303/1984; Belgian Patent No. 872,201.

The compounds represented by Formula III can be synthesized with reference to Japanese Patent O.P.I. Publication No. 181,381/1987.

The compounds represented by Formula IV can be synthesized with reference to Japanese Patent O.P.I. Publication No. 111,858/1983.

The compounds represented by Formula V can be synthesized with reference to Belgian Patent No. 894,758.

Typical examples of the compounds represented by formulas I through VI are given below.

I − 1

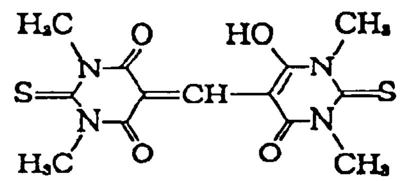

I − 2

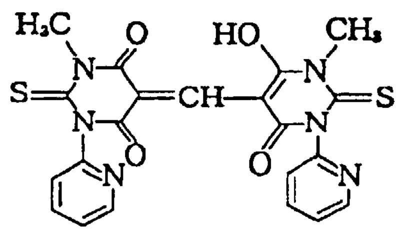

I − 3

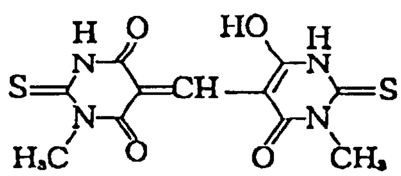

I − 4

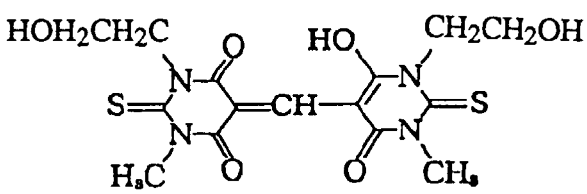

I – 5

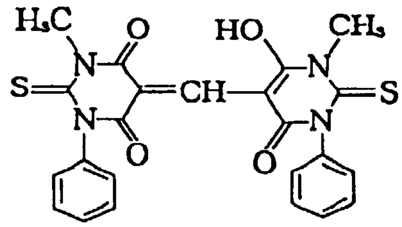

I – 6

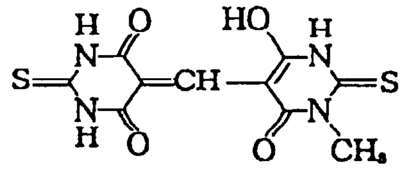

I – 7

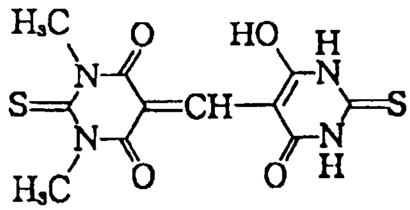

I – 8

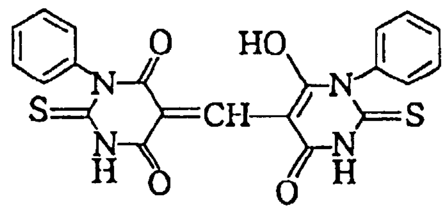

I – 9

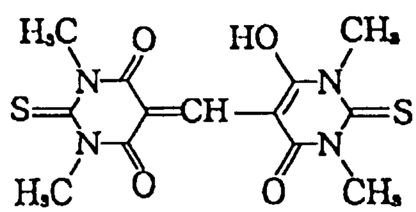

I - 10

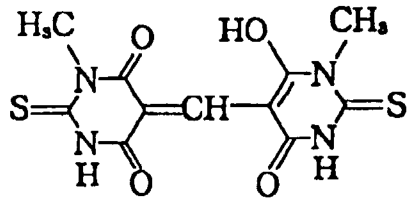

I - 11

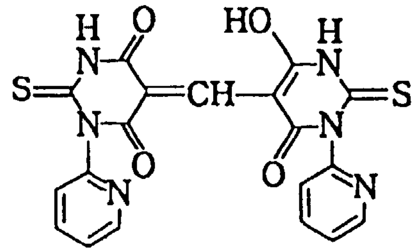

II - 1

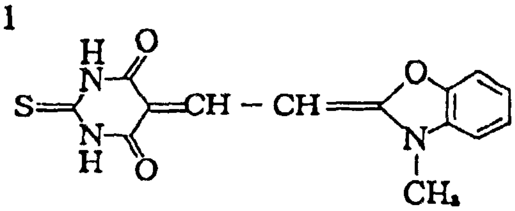

II - 2

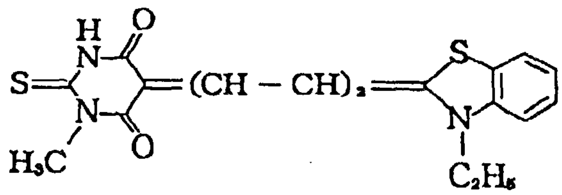

II - 3

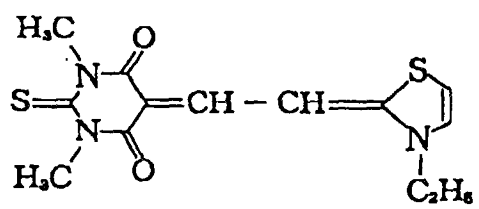

II − 4

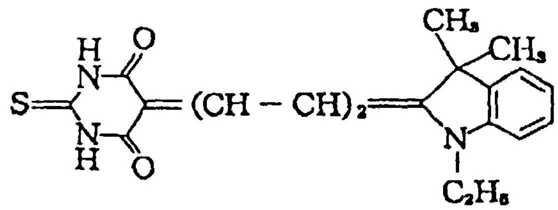

II − 5

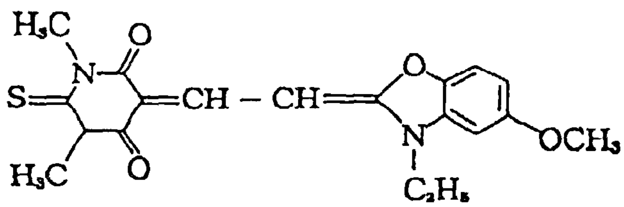

III − 1

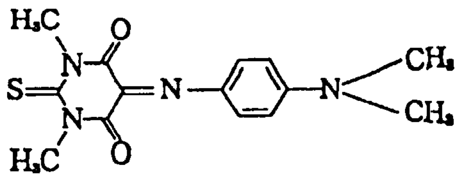

III − 2

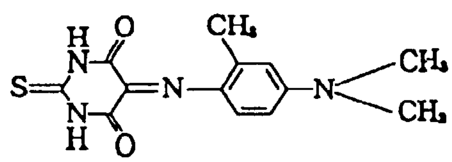

III − 3

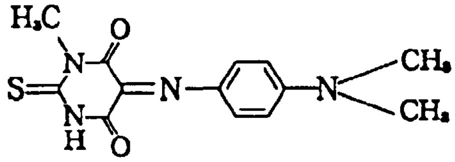

III − 4

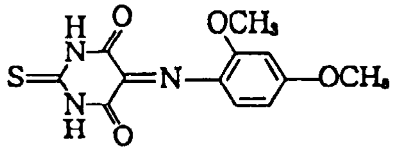

III − 5

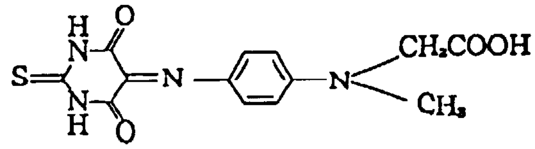

III − 6

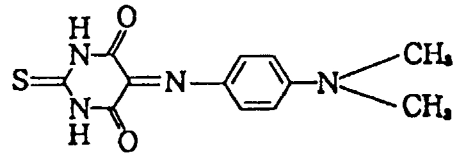

III − 7

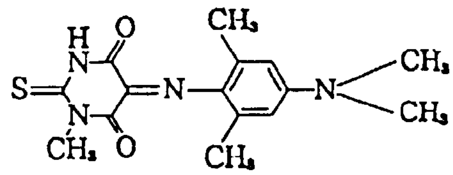

IV − 3

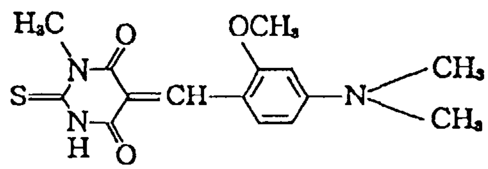

IV − 4

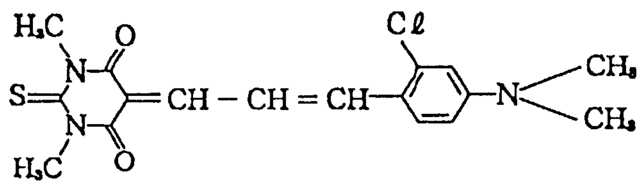

V − 2

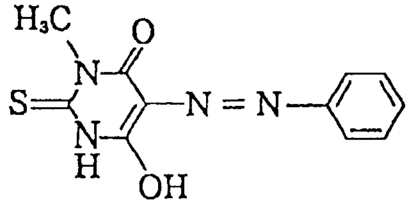

V-3

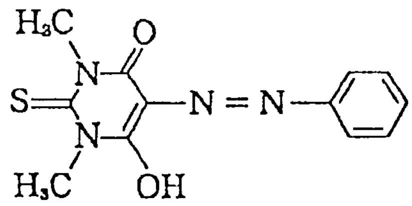

V-5

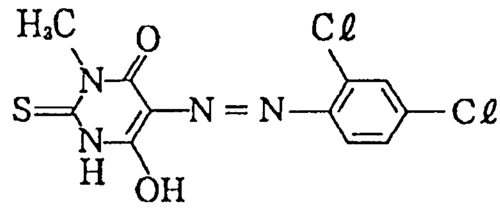

VI-1

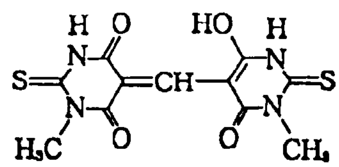

VI-2

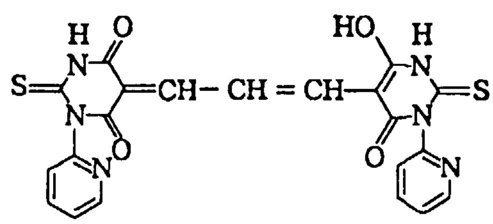

VI-3

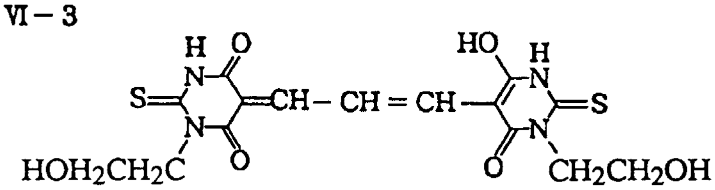

VI-4

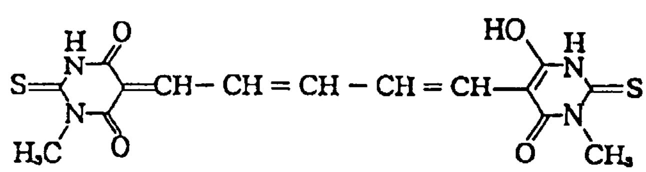

VI－5

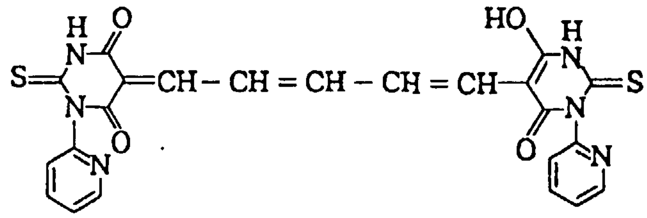

VI－6

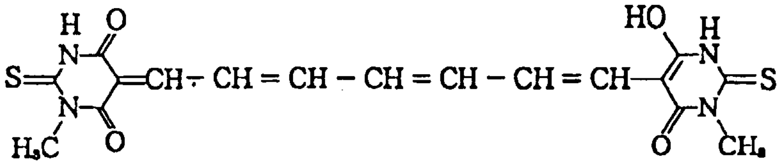

VI－7

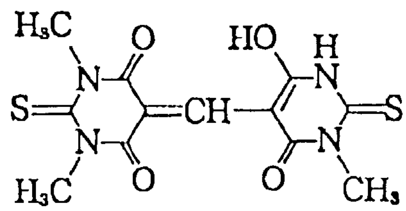

VI－8

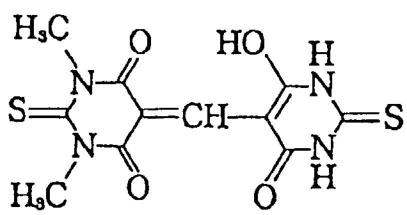

VI－9

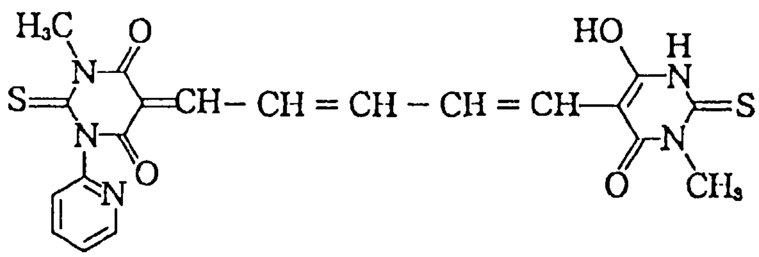

VI－10

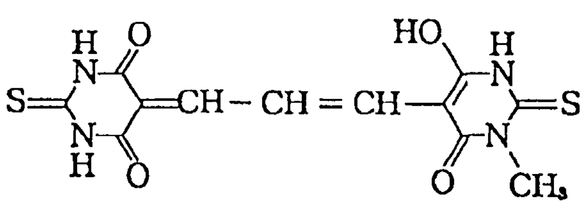

Production of silver salts from these dyes and their addition to light-sensitive materials can be achieved in accordance with the methods described in eg. British Patent No. 1,077,049 and US Patent No. 3,471,293.

In the light-sensitive material of the present invention, the silver salts of dyes represented by formulas I through VI can be used as anti-irradiation dyes in the silver halide emulsion layer, and can be used as filter dyes or anti-halation dyes in non-sensitive hydrophilic colloid layers. Also, two or more silver salts of the dye as defined in the present invention may be used in combination according to the purpose of use thereof, and may also be used in combination with other dyes, as long as the effect of the invention is not interfered with.

In the present invention, the amount of silver salt of dye added to the filter layer or anti-halation layer is preferably 0.05 to 2.0 g/$m^2$, more preferably 0.1 to 1.0 g/$m^2$. The amount of gelatin added to these layers is preferably 0.3 to 1.5 g/$m^2$, more preferably 0.5 to 1.0 g/$m^2$.

In the present invention, the ratio of the amount of silver salt of dye contained in the filter layer or anti-halation layer and the amount of gelatin contained therein (amount of silver salt of dye added/amount of gelatin added) is normally not less than 0.1:1, preferably 0.1:1 to 2.0:1, and more preferably 0.2:1 to 1.0:1.

Examples of materials for the support of the light-sensitive material of the present invention include cellulose acetate, cellulose nitrate, polyester films such as polyethylene terephthalate films, polyolefin films such as polyethylene films, polystyrene films, polyamide films, polycarbonate films, baryta paper, polyolefin-coated paper, polypropylene synthetic paper, glass plates and metals, which materials are properly selected according to the purpose of the use of the light-sensitive material.

Examples of hydrophilic colloids for the light-sensitive material of the present invention include gelatin, gelatin derivatives such as phthalated gelatin and benzenesulfonylated gelatin, water-soluble naturally-occurring polymeric substances such as agar, casein and alginic acid, synthetic resins such as polyvinyl alcohol and polyvinyl pyrrolidone, and cellulose derivatives such as carboxymethyl cellulose, which substances may be used singly or in combination.

Examples of silver halide emulsions for the light-sensitive material of the present invention include those in common use for silver halide emulsions, such as silver chloride, silver bromide, silver iodide, silver chlorobromide, silver iodobromide and silver chloroiodobromide.

The silver halide emulsion used in the light-sensitive material of the present invention can be prepared by various methods, including the method described in Japanese Patent Examined Publication No. 7772/1971 and the method described in US Patent No. 2,592,250, wherein a so-called conversion emulsion is prepared by first forming an emulsion of silver salt grains whose solubility product is higher than that of silver bromide, and then converting at least a part of these particles to silver bromide salt or silver iodobromide salt. This silver halide emulsion can be sensitized with a chemical sensitizer, e.g., a sulfur sensitizer such as thiosulfate, allyl thiocarbamide, thiourea, allyl isothiocyanate or cystine, an active or inert selenium sensitizer, or a noble metal sensitizer such as potassium chloroaurate, auric trichloride, potassium auric thiocyanate or 2-aurothiabenzothiazolemethyl chloride or other gold sensitiser, ammonium chloropalladate, sodium chloropalladate or another palladium sensitiser, potassium chloroplatinate or another platinum sensitiser or a ruthenium sensitiser, or a combination thereof. This emulsion can also be subjected to reduction sensitization using a non-chemical sensitizer, and can be stabilized with for example, a triazole, an imidazole, an azaindene, a benzothiazolium compound, a zinc compound, a cadmium compound, a mercaptan or a mixture thereof, and can contain a sensitizing compound of the thioether type, quaternary ammonium type or polyalkylene oxide type, for example.

The silver halide emulsion used in the light-sensitive material of the present invention can be spectrally sensitized with a sensitizing dye as necessary. Examples of sensitizing dyes which can be used include various dyes such as cyanine dyes, merocyanine dyes, complex cyanine dyes, oxonol dyes, hemioxonol dyes, styryl dyes, merostyryl dyes and streptocyanine dyes, which sensitizing dyes may be used singly or in combination.

In the light-sensitive material of the present invention, the emulsion layer and other hydrophilic colloid layers may contain wetting agents, plasticizers, film property improving agents and other additives such as glycerol, dihydroxyalkanes such as 1,5-pentanediol, ethylene bis-glycolate, bis-ethoxydiethylene glycol succinate, and water-dispersible fine granular polymer compounds obtained by emulsion polymerization. The light-sensitive material of the present invention can also contain photographic additives, including aldehyde compounds, N-methylol compounds such as N, N′-dimethylolurea, active halogen compounds such as mucohalogen acid, divinylsulfonic acid and 2,4-dichloro-6-hydroxy-s-triazine, hardeners such as dioxane derivatives, divinyl ketones, isocyanates and carbodiimides, surfactants such as saponin, polyalkylene glycol, polyalkylene glycol ether, alkyl sulfonates, alkyl benzenesulfonates and alkyl naphthalenesulfonates, brightening agents, antistatic agents, antistaining agents, UV absorbents and stabilizers.

In the light-sensitive material of the present invention, the silver halide emulsion may contain a color coupler. The coupler may be 4-equivalent or 2-equivalent and may be a colored coupler for masking or a coupler which releases a developing inhibitor. The couplers which are advantageously used are chain-opened ketomethylene compounds such as acylacetamide for yellow dyes, pyrazolone compounds, pyrazolotriazole compounds and pyrazolotetrazole compounds for magenta dyes and phenol compounds and naphthol compounds for cyan dyes.

The light-sensitive material of the present invention can take any layer structure which ordinary light-sensitive

materials can take.

The present invention is hereinafter described in more detail by means of the following examples.

Example 1

0.1 mol of each of the dyes listed in Tables 1 and 2 and 10.1 g (0.1 mol) of triethylamine were dissolved in 1000 ml of water, and 200 ml of a 1 mol/l aqueous solution of silver nitrate was added drop by drop with stirring. The resulting precipitate was collected by filtration, washed and dried to yield the desired silver salt of dye.

To 700 ml of a 3% aqueous solution of gelatin, 0.05 mol of the silver salt of dye described above and 30 ml of a 6.7% solution of surfactant Triton X-200 (produced by Rohm & Haas Co.) were added, and 2 kg of glass beads (1 mm diameter) were added, followed by pulverization for 8 hours using a medium agitation mill (Aquamizer QA-5, produced by Hosokawa Micron), to yield a dispersion of the silver salt of dye.

To 100 ml of each dispersion thus obtained, 0.1 g of bisvinylsulfonylmethyl ether H-1 as a gelatin hardener and a coating aid Su-1 were added, after which the dispersion was coated and dried on a cellulose triacetate film support, subbed with a gelatin layer, to a coating amount of each silver salt of dye of 0.001 mol/$m^2$, to yield sample Nos. 1-1 through 1-27.

Using the method described in Example 1 of Japanese Patent O.P.I. Publication No. 23441/1991, a fine dispersion of dye D-2 was prepared, and hardener H-1 and coating aid Su-1 were added in the same manner as with sample Nos. 1-1 through 1-27, and the resulting mixture was coated and dried on a cellulose triacetate film support, subbed with a gelatin layer, to a coating amount of dye of 0.001 mol/$m^2$, to yield sample No. 1-28.

In accordance with the method described in Examples 1 through 9 of Japanese Patent O.P.I. Publication No. 291051/1988, an aqueous solution of gelatin containing dye D-3 and a polymer dispersion mordant in a ratio by volume of 1 part of the former to about 40 parts of the latter was coated and dried on a cellulose triacetate film support, subbed with a gelatin layer, to a coating amount of dye of 0.001 mol/$m^2$, to yield sample No. 1-29.

Sample Nos. I-1 to I-10, I-12, I-13 and I-16 through 1-29 thus obtained were each processed with the following fixer A, alkali solution B and water at 20°C for 15 seconds, washed and dried, after which they were subjected to spectrometry using a spectrophotometer, and the decoloring ratio at the maximum absorption wavelength, relative to the non-processed sample, was calculated using the following equation. The results are shown in Tables 1 and 2.

Decoloration ratio (%) = [1 - (processed sample concentration/non-processed sample concentration)] × 100

Fixer A

| | |
|---|---|
| Sodium thiosulfate | 240 g |
| Anhydrous sodium sulfite | 15 g |
| Glacial acetic acid | 15 g |
| Potassium aluminum sulfate | 15 g |

Water was added to make a total quantity of 1000 ml.

Alkali solution B

| | |
|---|---|
| Potassium carbonate | 37.5 g |

Water was added to make a total quantity of 1000 ml, and 1 N $H_2SO_4$ was added to obtain a pH of 10.2.

Table 1

| Sample | Dye | Decoloration ratio, after washed (%) | Decoloration ratio, after processed with alkali solution B (%) | Decoloration ratio, after processed with Fixer A (%) | Remark |
|---|---|---|---|---|---|
| I-1 | I-1 | 0 | 0.3 | 96.5 | Inventive |
| I-2 | I-8 | 0 | 0.7 | 96.5 | Inventive |
| I-3 | I-10 | 0 | 0.6 | 95.6 | Inventive |

Table 1 (continued)

| Sample | Dye | Decoloration ratio, after washed (%) | Decoloration ratio, after processed with alkali solution B (%) | Decoloration ratio, after processed with Fixer A (%) | Remark |
|---|---|---|---|---|---|
| I-4 | II-1 | 0 | 0.6 | 96.4 | Inventive |
| I-5 | II-2 | 0 | 0.8 | 96.4 | Inventive |
| I-6 | II-4 | 0 | 1.0 | 95.6 | Inventive |
| I-7 | III-1 | 0 | 0.8 | 96.4 | Inventive |
| I-8 | III-3 | 0 | 0.7 | 96.4 | Inventive |
| I-9 | III-5 | 0 | 0.7 | 96.5 | Inventive |
| I-10 | III-6 | 0 | 0.6 | 96.5 | Inventive |
| I-12 | IV-3 | 0 | 0.6 | 96.5 | Inventive |
| I-13 | IV-4 | 0 | 0.8 | 96.5 | Inventive |
| I-16 | V-3 | 0 | 0.8 | 96.5 | Inventive |
| I-17 | VI-1 | 0 | 0.7 | 95.7 | Inventive |
| I-18 | VI-2 | 0 | 1.0 | 96.5 | Inventive |
| I-19 | VI-3 | 0 | 0.7 | 96.5 | Inventive |
| I-20 | VI-4 | 0 | 0.8 | 95.7 | Inventive |

Table 2

| Sample | Dye | Decoloration ratio, after washed (%) | Decoloration ratio, after processed with alkali solution B (%) | Decoloration ratio, after processed with Fixer A (%) | Remark |
|---|---|---|---|---|---|
| I-21 | VI-6 | 0 | 0.9 | 96.4 | Inventive |
| I-22 | VI-8 | 0 | 0.9 | 96.5 | Inventive |
| I-23 | VI-10 | 0 | 0.8 | 96.5 | Inventive |
| I-24 | D-1 | 0 | 0.1 | 89.7 | Comparative |
| I-25 | D-2 | 0 | 1.3 | 88.7 | Comparative |
| I-26 | D-3 | 0 | 1.0 | 89.6 | Comparative |
| I-27 | D-4 | 0 | 1.8 | 88.3 | Comparative |
| I-28 | D-5 | 0 | 77.5 | 1.0 | Comparative |
| I-29 | D-6 | 0.8 | 51.3 | 1.6 | Comparative |

Dye D-1 (comparative)

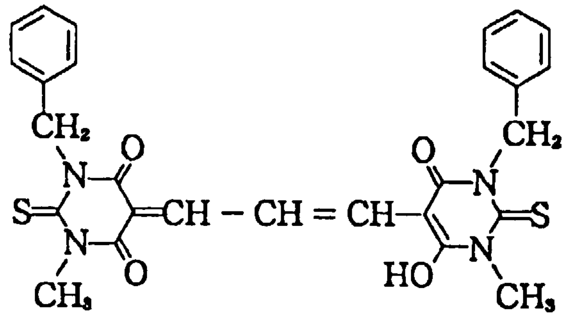

Dye D-2 (comparative)

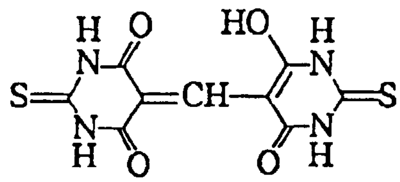

Dye D-3 (comparative)

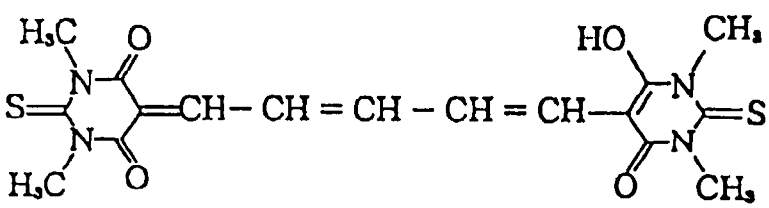

Dye D-4 (comparative)

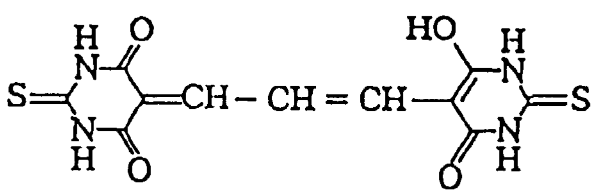

Dye D-5 (comparative)

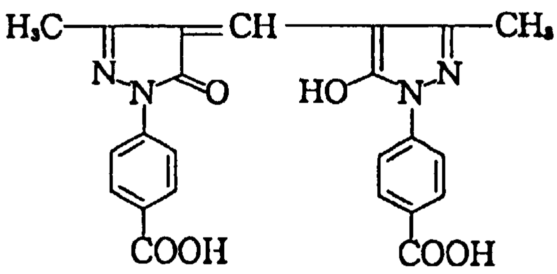

Dye D-6 (comparative)

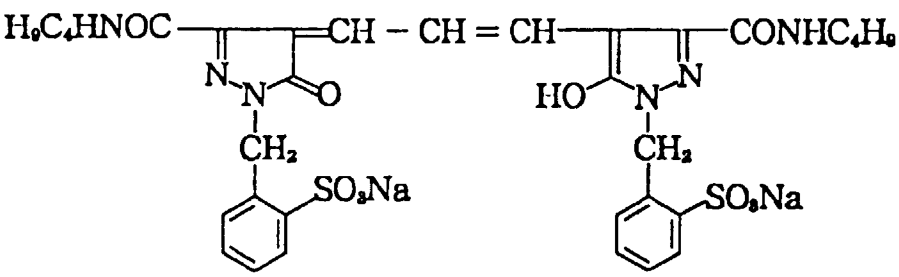

Described in Japanese Patent O.P.I. Publication No. 139949/1988.

Su-1

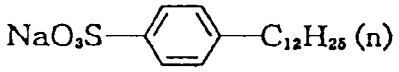

Polymer dispersion mordant

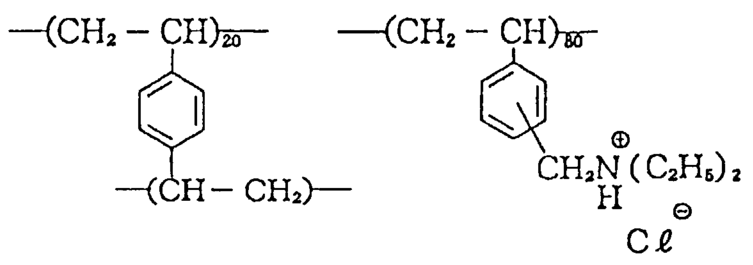

From Tables 1 and 2, it is evident that the silver salt of dye as defined in the present invention has a greater bleaching rate with less color residence after fixation in comparison with the silver salts of comparative dyes D-1 through D-4. The dye used in the present invention is also characterized by a higher bleaching effect by fixer processing in comparison with known comparative dyes D-5 and D-6. The silver salt of dye used in the present invention was also found to possess good diffusion resistance comparable to that of the silver salts of comparative dyes and comparative non-diffusible dyes.

Example 2

Preparation of sample No. 2-1

A 10% aqueous solution of gelatin was coated on a cellulose triacetate film support, previously coated with a gelatin layer, to yield a first layer. Simultaneously, a light-sensitive silver halide emulsion layer and a surface protecting layer, which had the following compositions, were double coated on layer 1 to yield sample No. 2-1.

Composition of light-sensitive silver halide emulsion layer

Silver halide emulsion (monodispersed emulsion with uniform composition having an average grain size of 0.48 µm and an iodine content of 2 mol%) 3.2 $g/m^2$

Gelatin 1.6 g/g silver

Additives

Sensitizing dye $4.8 \times 10^{-4}$/mol silver

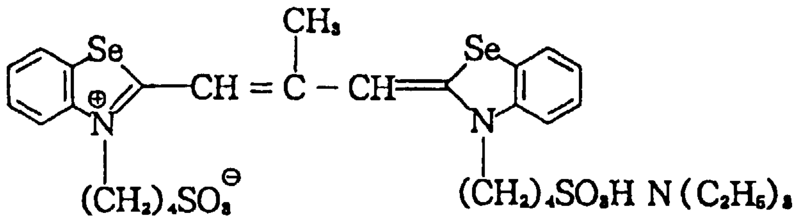

Coating aid sodium dodecylbenzenesulfonate 0.1 $mg/m^2$

Composition of surface protecting layer

Gelatin 0.6 $g/m^2$

Coating aid sodium N-oleoyl-N-methyltaurate 0.2 $g/m^2$

Hardener bis-vinylsulfonylmethyl ether 0.05 g/gelatin

Preparation of sample Nos. 2-2 through 2-23

Multiple-layered photographic material sample Nos. 2-2 to 2-14, 2-16, 2-17 and 2-19 through 2-23 were prepared in the same manner as with sample No. 2-1 except that the 10% aqueous solution of gelatin for layer 1 was replaced with a dispersion prepared using each of the silver salts of dyes or the comparative dyes shown in Table 3 as directed in Example 1.

Sample Nos. 2-1 through 2-23 thus obtained were each subjected to white light exposure through an optical wedge and then processed in the following procedures to assess effects on photographic performance.

Processing procedure (20°C)

| | |
|---|---|
| Development | 2 minutes |
| Fixation | 3 minutes |
| Washing | 3 minutes |
| Drying | |

The processing solutions used in the respective procedures had the following compositions:

Developer

| | |
|---|---|
| Water | 500 ml |
| Hydroquinone | 8 g |
| Metol | 2 g |
| Anhydrous sodium sulfite | 90 g |
| Sodium carbonate monohydrate | 52.5 g |
| Potassium bromide | 5 g |

Water was added to make a total quantity of 1 l.

Fixer

| | |
|---|---|
| Water | 600 ml |
| Ammonium thiosulfate | 80 g |
| Anhydrous sodium sulfite | 5 g |
| Sodium bisulfite | 5 g |

Water was added to make a total quantity of 1 l, and acetic acid was added to obtain a pH of 6.0. The results are shown in Table 3.

Table 3

| Sample | Dye in Gelatin layer 1 (molar amount/$m^2$) | Effect on fogging | Remark | |
|---|---|---|---|---|
| 2-1 | none | 0.07 | - | Control |
| 2-2 | Silver salt of D-1 (0.001) | 0.13 | - | Comparative |
| 2-3 | Silver salt of D-2 (0.001) | 0.14 | - | Comparative |
| 2-4 | Silver salt of D-3 (0.001) | 0.14 | - | Comparative |
| 2-5 | Silver salt of D-4 (0.001) | 0.07 | Slight yellowing seen. | Comparative |
| 2-6 | Silver salt of D-5 (0.001) | 0.08 | Minute aggregates observed in coated layer. | Comparative |
| 2-7 | Silver salt of I-1 (0.001) | 0.07 | - | Inventive |

Table 3 (cont'd)

| Sample | Dye in Gelatin layer 1 (molar amount/$m^2$) | Effect on fogging | Remark | |
|---|---|---|---|---|
| 2-8 | Silver salt of I-2 (0.001) | 0.07 | - | Inventive |
| 2-9 | Silver salt of I-5 (0.001) | 0.08 | - | Inventive |
| 2-10 | Silver salt of II-1 (0.001) | 0.08 | - | Inventive |
| 2-11 | Silver salt of II-5 (0.001) | 0.07 | - | Inventive |
| 2-12 | Silver salt of III-1 (0.001) | 0.07 | - | Inventive |
| 2-13 | Silver salt of III-4 (0.001) | 0.07 | - | Inventive |
| 2-14 | Silver salt of III-5 (0.001) | 0.08 | - | Inventive |
| 2-16 | Silver salt of IV-4 (0.001) | 0.08 | - | Inventive |
| 2-17 | Silver salt of V-2 (0.001) | 0.07 | - | Inventive |
| 2-19 | Silver salt of VI-1 (0.001) | 0.07 | - | Inventive |
| 2-20 | Silver salt of VI-2 (0.001) | 0.07 | - | Inventive |
| 2-21 | Silver salt of VI-5 (0.001) | 0.07 | - | Inventive |
| 2-22 | Silver salt of VI-6 (0.001) | 0.08 | - | Inventive |
| 2-23 | Silver salt of VI-9 (0.001) | 0.07 | - | Inventive |

As shown in Table 3, comparative dyes D-1 through D-3 had slightly increased fogging density, indicating an effect on fogging. Although comparative dyes D-4 and D-5 did not affect fogging, yellowing occurred in D-4, and coatability was adversely affected in D-5. On the other hand, the silver salt of dye used in the present invention did not affect coatability, having little effect on the silver halide in adjoining layers. The dye used in the present invention was also found to have a good property of improved sharpness in comparison with sample No. 2-1.

## Claims

1. A silver halide photographic light-sensitive material comprising a silver salt of a dye which is of Formula I, Formula II, Formula III, Formula IV, Formula V or Formula VI;

Formula I

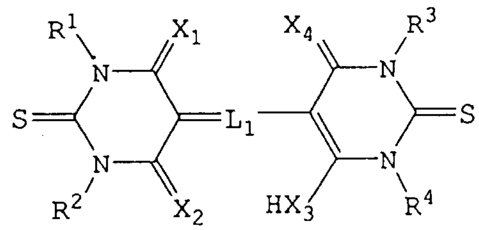

wherein $R^1$ represents an alkyl group, an alkenyl group, an aryl group or a heterocyclic group, $R^2$ through $R^4$ independently represent a hydrogen atom, an alkyl group, an alkenyl group, an aryl group or a heterocyclic group, $X_1$ through $X_4$ independently represent an oxygen atom or a sulfur atom and $L_1$ represents a methine group,

Formula II

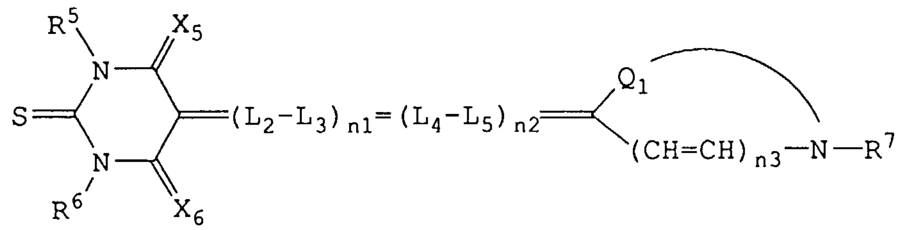

wherein $R^5$ and $R^6$ independently represent a hydrogen atom, an alkyl group, an alkenyl group, an aryl group or a heterocyclic group, $X_5$ through $X_6$ independently represent an oxygen atom or a sulfur atom, $L_2$ through $L_5$ each represent a methine group, $n_1$ through $n_3$ independently represent an integer of 0 to 2, $R^7$ represents an alkyl group or an alkenyl group and $Q_1$ represents a group of non-metallic atoms necessary to complete a 5 or 6-membered heterocycle,

Formula III

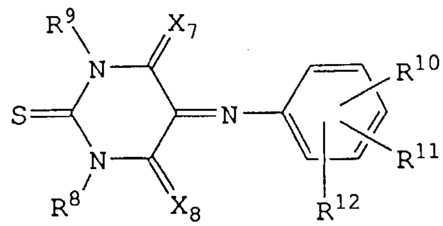

wherein $R^8$ and $R^9$ independently represent a hydrogen atom, an alkyl group, an alkenyl group, an aryl group or a heterocyclic group, $X_7$ through $X_8$ independently represent an oxygen atom or a sulfur atom and, $R^{10}$ through $R^{12}$ independently represent a hydrogen atom, an alkyl group, an alkenyl group, an aryl group, a heterocyclic group, a halogen atom, a cyano group, a sulfo group, $-COR^{13}$, $-CON(R^{13})(R^{14})$, $-N(R^{13})(R^{14})$, $-OR^{13}$, $-SOR^{13}$, $-SO_2R^{13}$, $-SO_2N(R^{13})(R^{14})$, $-N(R^{13})COR^{14}$, $-N(R^{13})SO_2R^{14}$, $-N(R^{13})CON(R^{14})(R^{15})$, $-SR^{13}$ or $-COOR^{13}$, where $R^{13}$ through $R^{15}$ independently represent a hydrogen atom, an alkyl group, an alkenyl group, an aryl group or a heterocyclic group,

Formula IV

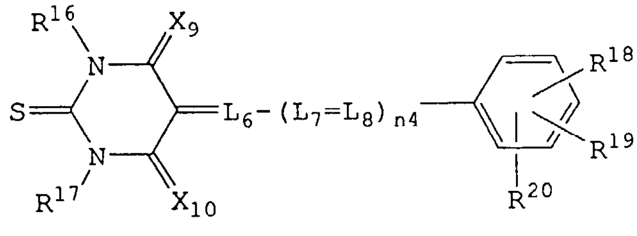

wherein $R^{16}$ and $R^{17}$ independently represent a hydrogen atom, an alkyl group, an alkenyl group an aryl group or a heterocyclic group, with the proviso that they are not both hydrogen, $X_9$ and $X_{10}$ independently represent an

oxygen atom or a sulfur atom, $L_6$ through $L_8$ each represent a methine group, $n_4$ represents an integer of 0 to 2 and $R^{18}$ through $R^{20}$ independently represent a hydrogen atom, an alkyl group, an alkenyl group, an aryl group, a heterocyclic group, a halogen atom, a cyano group, a sulfo group, $-COR^{13}$, $-CON(R^{13})(R^{14})$,$-N(R^{13})(R^{14})$, $-OR^{13}$, $-SOR^{13}$, $-SO_2R^{13}$, $-SO_2N(R^{13})(R^{14})$, $-N(R^{13})COR^{14}$, where $-N(R^{13})SO_2R^{14}$, $-N(R^{13})CON(R^{14})(R^{15})$, $-SR^{13}$ or $-COOR^{13}$, where $R^{13}$ through $R^{15}$ independently represent a hydrogen atom, an alkyl group, an alkenyl group, an aryl group or a heterocyclic group,

Formula V

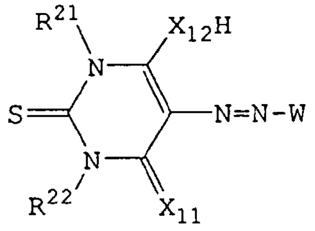

wherein $R^{21}$ and $R^{22}$ independently represent a hydrogen atom, an alkyl group, alkenyl group, an aryl group or a heterocyclic group, with the proviso that they are not both hydrogen, $X_{11}$ and $X_{12}$ independently represent an oxygen atom or a sulfur atom, W represents an aryl group or a heterocyclic group,

Formula VI

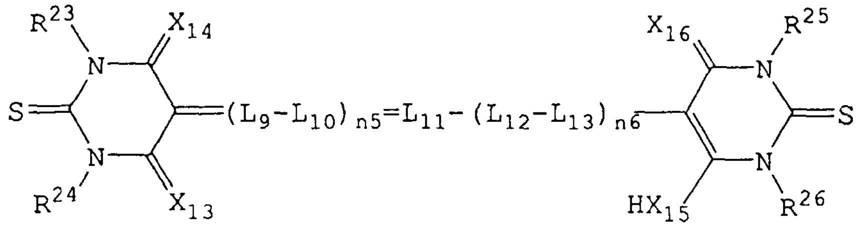

wherein $R^{23}$ through $R^{25}$ independently represent a hydrogen atom, an alkyl group, an alkenyl group, an aryl group or a heterocyclic group, $R^{26}$ represents an alkyl group, an alkenyl group, an aryl group or a heterocyclic group, provided that at least one of $R^{23}$ through $R^{25}$ is a hydrogen atom, $L_9$ through $L_{13}$ each represent a methine group, $n_5$ and $n_6$ represents an integer of 0 to 2 and $X_{13}$ through $X_{16}$ independently represent an oxygen atom or a sulfur atom.

2. The silver halide photographic light-sensitive material of claim 1, which comprises a filter layer or an anti-halation layer, and the filter layer or the anti-halation layer contains 0.05 to 2.0 g/m$^2$ of the silver salt of dye.

3. The silver halide photographic light-sensitive material of claim 2, wherein the filter layer or the anti-halation layer contains 0.1 to 1.0 g/m$^2$ of the silver salt of dye.

4. The silver halide photographic light-sensitive material of claim 2 or 3 wherein the ratio of the amount of the silver salt of the dye contained in the filter layer or anti-halation layer and the amount of gelatin contained therein is not less than 0.1:1.

5. The silver halide photographic light-sensitive material of claim 4, wherein the ratio of the amount of the silver salt of the dye contained in the filter layer or anti-halation layer and the amount of gelatin contained therein is within the range of 0.1:1 to 2.0:1.

**Patentansprüche**

1. Lichtempfindliches photographisches Silberhalogenid-Aufzeichnungsmaterial mit einem Silbersalz eines Farbstoffs entsprechend der Formel I, Formel II, Formel III, Formel IV, Formel V oder Formel VI:

Formel I

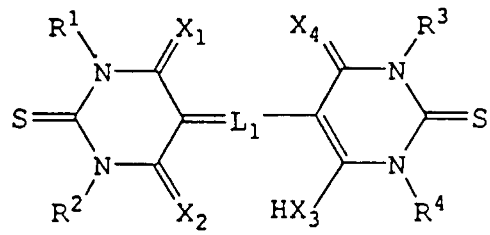

worin bedeuten:

$R^1$ eine Alkylgruppe, eine Alkenylgruppe, eine Arylgruppe oder eine heterocyclische Gruppe;
$R^2$ bis $R^4$ unabhängig voneinander ein Wasserstoffatom, eine Alkylgruppe, eine Alkenylgruppe, eine Arylgruppe oder eine heterocyclische Gruppe;
$X_1$ bis $X_4$ unabhängig voneinander ein Sauerstoffatom oder ein Schwefelatom und
$L_1$ eine Methingruppe;

Formel II

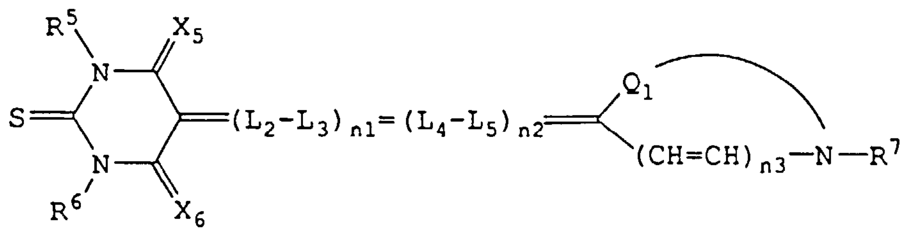

worin bedeuten:

$R^5$ und $R^6$ unabhängig voneinander ein Wasserstoffatom, eine Alkylgruppe, eine Alkenylgruppe, eine Arylgruppe oder eine heterocyclische Gruppe;
$X_5$ und $X_6$ unabhängig voneinander ein Sauerstoffatom oder ein Schwefelatom;
$L_2$ bis $L_5$ jeweils eine Methingruppe;
$n_1$ bis $n_3$ unabhängig voneinander eine ganze Zahl von 0 bis 2;
$R^7$ eine Alkylgruppe oder eine Alkenylgruppe und
$Q_1$ eine Gruppe von zur Vervollständigung eines 5- oder 6-gliedrigen Heterocyclus erforderlichen nicht-metallischen Atomen;

Formel III

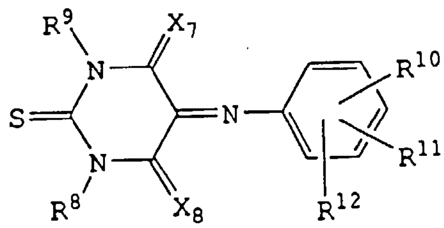

worin bedeuten:

$R^8$ und $R^9$ unabhängig voneinander ein Wasserstoffatom, eine Alkylgruppe, eine Alkenylgruppe, eine Arylgruppe oder eine heterocyclische Gruppe;
$X_7$ und $X_8$ unabhängig voneinander ein Sauerstoffatom oder ein Schwefelatom und
$R_{10}$ bis $R_{12}$ unabhängig voneinander ein Wasserstoffatom, eine Alkylgruppe, eine Alkenylgruppe, eine Arylgruppe, eine heterocyclische Gruppe, ein Halogenatom, eine Cyanogruppe, eine Sulfogruppe, $-COR^{13}$, $-CON(R^{13})(R^{14})$, $-N(R^{13})(R^{14})$, $-OR^{13}$, $-SOR^{13}$, $-SO_2R^{13}$, $-SO_2N(R^{13})(R^{14})$, $-N(R^{13})COR^{14}$, $-N(R^{13})SO_2R^{14}$, $-N(R^{13})CON(R^{14})(R^{15})$, $-SR^{13}$ oder $-COOR^{13}$ mit $R^{13}$ bis $R^{15}$ unabhängig voneinander jeweils gleich einem Wasserstoffatom, einer Alkylgruppe, einer Alkenylgruppe, einer Arylgruppe oder einer heterocyclischen Gruppe;

Formel IV

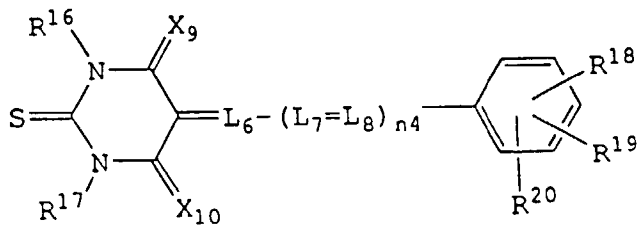

worin bedeuten:

$R^{16}$ und $R^{17}$ unabhängig voneinander ein Wasserstoffatom, eine Alkylgruppe, eine Alkenylgruppe, eine Arylgruppe oder eine heterocyclische Gruppe, wobei gilt, daß sie nicht beide (gleichzeitig) für ein Wasserstoffatom stehen dürfen;
$X_9$ und $X_{10}$ unabhängig voneinander ein Sauerstoffatom oder ein Schwefelatom;
$L_6$ bis $L_8$ jeweils eine Methingruppe;
$n_4$ eine ganze Zahl von 0 bis 2 und
$R^{18}$ bis $R^{20}$ unabhängig voneinander ein Wasserstoffatom, eine Alkylgruppe, eine Alkenylgruppe, eine Arylgruppe, eine heterocyclische Gruppe, ein Halogenatom, eine Cyanogruppe, eine Sulfogruppe, $-COR^{13}$, $-CON(R^{13})(R^{14})$, $-N(R^{13})(R^{14})$, $-OR^{13}$, $-SOR^{13}$, $-SO_2R^{13}$, $-SO_2N(R^{13})(R^{14})$, $-N(R^{13})COR^{14}$, $-N(R^{13})SO_2R^{14}$, $-N(R^{13})CON(R^{14})(R^{15})$, $-SR^{13}$ oder $-COOR^{13}$, mit $R^{13}$ bis $R^{15}$ unabhängig voneinander jeweils gleich einem Wasserstoffatom, einer Alkylgruppe, einer Alkenylgruppe, einer Arylgruppe oder einer heterocyclischen Gruppe;

Formel V

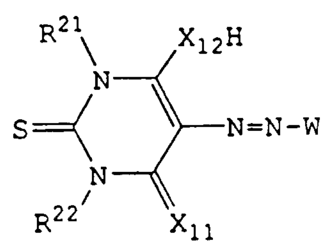

worin bedeuten:

$R^{21}$ und $R^{22}$ unabhängig voneinander jeweils ein Wasserstoffatom, eine Alkylgruppe, eine Alkenylgruppe, eine Arylgruppe oder eine heterocyclische Gruppe, wobei gilt, daß nicht beide Reste (gleichzeitig) für Wasserstoffatome stehen dürfen;
$X_{11}$ und $X_{12}$ unabhängig voneinander ein Sauerstoffatom oder ein Schwefelatom und
W eine Arylgruppe oder eine heterocyclische Gruppe;

Formel VI

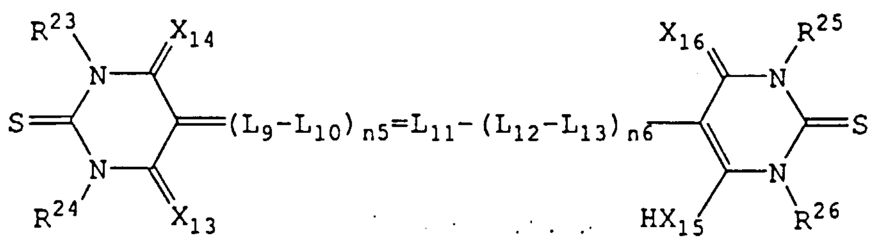

worin bedeuten:

$R^{23}$ bis $R^{25}$ unabhängig voneinander jeweils ein Wasserstoffatom, eine Alkylgruppe, eine Alkenylgruppe, eine Arylgruppe oder eine heterocyclische Gruppe;
$R^{26}$ eine Alkylgruppe, eine Alkenylgruppe, eine Arylgruppe oder eine heterocyclische Gruppe, wobei gilt, daß mindestens einer der Reste $R^{23}$ bis $R^{25}$ für ein Wasserstoffatom steht;
$L_9$ bis $L_{13}$ jeweils eine Methingruppe;
$n_5$ und $n_6$ jeweils eine ganze Zahl von 0 bis 2 und
$X_{13}$ bis $X_{16}$ unabhängig voneinander jeweils ein Sauerstoffatom oder ein Schwefelatom.

**2.** Lichtempfindliches photographisches Silberhalogenid-Aufzeichnungsmaterial nach Anspruch 1, welches eine Filterschicht oder eine Antilichthofschicht enthält und bei welchem die Filterschicht oder die Antilichthofschicht 0,05 bis 2,0 g/m² des Farbstoffsilbersalzes enthält.

**3.** Lichtempfindliches photographisches Silberhalogenid-Aufzeichnungsmaterial nach Anspruch 2, wobei die Filterschicht oder die Antilichthofschicht 0,1 bis 1,0 g/m² des Farbstoffsilbersalzes enthält.

**4.** Lichtempfindliches photographisches Silberhalogenid-Aufzeichnungsmaterial nach Anspruch 2 oder 3, wobei das Verhältnis Menge des in der Filterschicht oder Antilichthofschicht enthaltenen Farbstoffsilbersalzes/Menge an darin enthaltener Gelatine nicht weniger als 0,1/1 beträgt.

**5.** Lichtempfindliches photographisches Silberhalogenid-Aufzeichnungsmaterial nach Anspruch 4, wobei das Verhältnis Menge des in der Filterschicht oder Antilichthofschicht enthaltenen Farbstoffsilbersalzes/Menge der darin enthaltenen Gelatine im Bereich von 0,1/1 bis 2,0/1 liegt.

**Revendications**

**1.** Matériau photographique photosensible à base d'halogénure d'argent, comprenant un sel d'argent d'un colorant qui répond à la formule I, la formule II, la formule III, la formule IV, la formule V ou la formule VI ;

Formule I

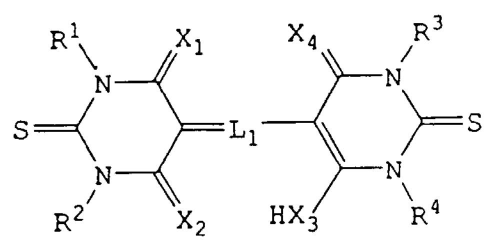

dans laquelle $R^1$ représente un groupe alkyle, un groupe alcényle, un groupe aryle ou un groupe hétérocyclique, $R^2$ à $R^4$ représentent indépendamment un atome d'hydrogène, un groupe alkyle, un groupe alcényle, un groupe aryle ou un groupe hétérocyclique, $X_1$ à $X_4$ représentent indépendamment un atome d'oxygène ou un atome de

soufre et $L_1$ représente un groupe méthine,

## Formule II

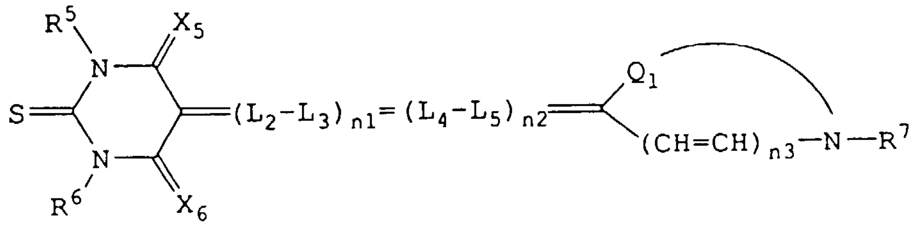

dans laquelle $R^5$ et $R^6$ représentent indépendamment un atome d'hydrogène, un groupe alkyle, un groupe alcényle, un groupe aryle ou un groupe hétérocyclique, $X_5$ à $X_6$ représentent indépendamment un atome d'oxygène ou un atome de soufre, $L_2$ à $L_5$ représentent chacun un groupe méthine, $n_1$ à $n_3$ représentent indépendamment un nombre entier de O à 2, $R^7$ représente un groupe alkyle ou un groupe alcényle et $Q_1$ représente un groupe d'atomes non métalliques nécessaire pour compléter un hétérocycle à 5 ou 6 maillons,

## Formule III

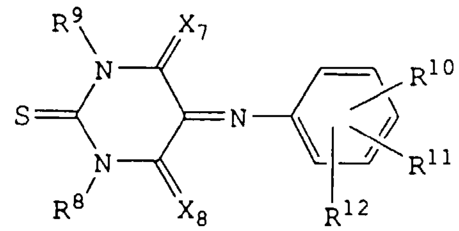

dans laquelle $R^8$ et $R^9$ représentent indépendamment un atome d'hydrogène, un groupe alkyle, un groupe alcényle, un groupe aryle ou un groupe hétérocyclique, $X_7$ à $X_8$ représentent indépendamment un atome d'oxygène ou un atome de soufre et $R^{10}$ à $R^{12}$ représentent indépendamment un atome d'hydrogène, un groupe alkyle, un groupe alcényle, un groupe aryle, un groupe hétérocyclique, un atome d'halogène, un groupe cyano, un groupe sulfo, $-COR^{13}$, $-CON(R^{13})(R^{14})$, $N(R^{13})(R^{14})$, $-OR^{13}$, $-SOR^{13}$, $-SO_2R^{13}$, $-SO_2N(R^{13})(R^{14})$, $-N(R^{13})COR^{14}$, $-N(R^{13})SO_2R^{14}$, $-N(R^{13})CON(R^{14})(R^{15})$, $-SR^{13}$ ou $-COOR^{13}$, où $R^{13}$ à $R^{15}$ représentent indépendamment un atome d'hydrogène, un groupe alkyle, un groupe alcényle, un groupe aryle ou un groupe hétérocyclique,

## Formule IV

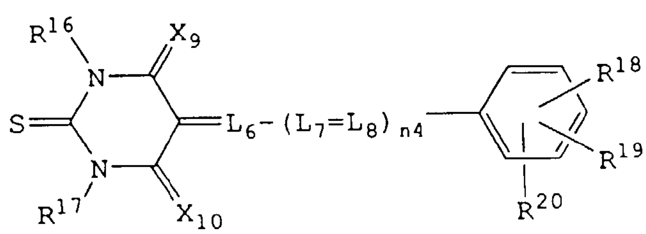

dans laquelle $R^{16}$ et $R^{17}$ représentent indépendamment un atome d'hydrogène, un groupe alkyle, un groupe alcényle, un groupe aryle ou un groupe hétérocyclique, étant entendu qu'ils ne représentent pas tous les deux l'hydrogène, $X_9$ et $X_{10}$ représentent indépendamment un atome d'oxygène ou un atome de soufre, $L_6$ à $L_8$ représentent chacun un groupe méthine, n4 représente un nombre entier de 0 à 2 et $R^{18}$ à $R^{20}$ représentent indépendamment un atome d'hydrogène, un groupe alkyle, un groupe alcényle, un groupe aryle, un groupe hétérocyclique, un atome d'halogène, un groupe cyano, un groupe sulfo, $-COR^{13}$, $-CON(R^{13})(R^{14})$, $-N(R^{13})(R^{14})$, $-OR^{13}$, $-SOR^{13}$, $-SO_2R^{13}$, $-SO_2N(R^{13})(R^{14})$, $-N(R^{13})COR^{14}$, $-N(R^{13})SO_2R^{14}$, $-N(R^{13})CON(R^{14})(R^{15})$, $-SR^{13}$ ou $-COOR^{13}$, où $R^{13}$ à $R^{15}$ représentent indépendamment un atome d'hydrogène, un groupe alkyle, un groupe alcényle, un groupe aryle ou un groupe hétérocyclique,

## Formule V

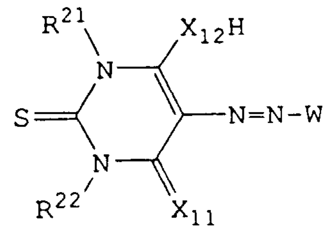

dans laquelle $R^{21}$ et $R^{22}$ représentent indépendamment un atome d'hydrogène, un groupe alkyle, un groupe alcényle, un groupe aryle ou un groupe hétérocyclique, étant entendu qu'ils ne représentent pas tous les deux l'hydrogène, $X_{11}$ et $X_{12}$ représentent indépendamment un atome d'oxygène ou un atome de soufre, W représente un groupe aryle ou un groupe hétérocyclique,

## Formule VI

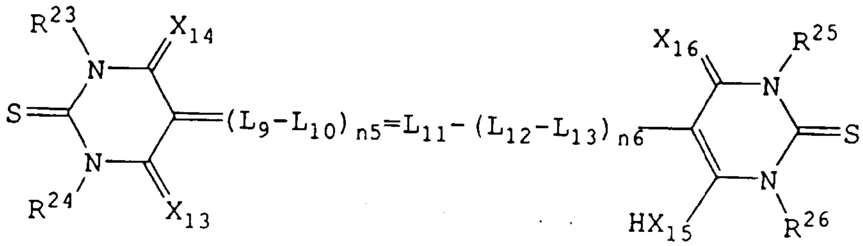

dans laquelle $R^{23}$ à $R^{25}$ représentent indépendamment un atome d'hydrogène, un groupe alkyle, un groupe alcényle, un groupe aryle ou un groupe hétérocyclique, $R^{26}$ représente un groupe alkyle, un groupe alcényle, un groupe aryle ou un groupe hétérocyclique, étant entendu qu'au moins l'un de $R^{23}$ à $R^{25}$ représente un atome d'hydrogène, $L_9$ à $L_{13}$ représentent chacun un groupe méthine, $n_5$ et $n_6$ représentent un nombre entier de 0 à 2 et $X_{13}$ à $X_{16}$ représentent indépendamment un atome d'oxygène ou un atome de soufre.

2. Matériau photographique photosensible à base d'halogénure d'argent selon la revendication 1, qui comprend une couche de filtration ou une couche anti-halo, et la couche de filtration ou la couche anti-halo contient de 0,05 à 2,0 g/$m^2$ du sel d'argent du colorant.

3. Matériau photographique photosensible à base d'halogénure d'argent selon la revendication 2, dans lequel la couche de filtration ou la couche anti-halo contient de 0,1 à 1,0 g/$m^2$ du sel d'argent du colorant.

4. Matériau photographique photosensible à base d'halogénure d'argent selon la revendication 2 ou 3, dans lequel le rapport de la quantité du sel d'argent du colorant contenu dans la couche de filtration ou dans la couche anti-halo à la quantité de gélatine contenue dans ces couches n'est pas inférieure à 0,1 %.

5. Matériau photographique photosensible à base d'halogénure d'argent selon la revendication 4, dans lequel le rapport de la quantité du sel d'argent du colorant contenu dans la couche de filtration ou dans la couche anti-halo à la quantité de gélatine contenue dans ces couches est compris dans la gamme de 0,1 % à 2,0 %.